# EUROPEAN PATENT APPLICATION

(11) **EP 1 675 367 A1**
(43) Date of publication of application: **28.06.2006**
(21) Application number: 04380269.3
(22) Date of filing: 23.12.2004
(51) Int. Cl.: H04M 1/677

(54) **Mobile telephone and method for placing an emergency call**

(71) Applicant: Owasys Advanced Wireless Devices, S.L.L., 48170 Zamudio, Vizcaya (ES)
(72) Inventor: Gonzalez, José J.J., 48901 Baracaldo (Vizcaya) (ES)
(74) Representative: Davila Baz, Angel

(57) **Abstract**

The invention relates to a mobile telephone, comprising an emergency key (300) arranged to set the mobile telephone into the ON state, an identification number pre-stored in a memory (106) in the mobile equipment part being retrieved (S1331) and processed (S230) by means (205) for comparing an entered identification number with a personal identification number (PIN) stored in the subscriber identity card (200); if said retrieved identification number is identical to said PIN stored in the card (200), a telephone call can be directed to a pre-established emergency telephone number, without any need for manually entering the PIN.

Another aspect of the invention relates to setting the terminal into a hands-free mode when an incoming call having a certain calling line identity is not answered in time.

## Description

### Field of the invention

The invention relates to the field of mobile telephony and implies the use of mobile telecommunications. In the field of the telecommunications, acronyms are frequently used, some of which are explained hereinafter:
GSM: Global System for Mobile Communications; a world-wide deployed Mobile Telecommunications System in different frequency bands.
SIM: Subscriber Identity Module; a smart card that is placed inside GSM mobile telephones and that incorporates a series of data and features that are necessary for the GSM telephones to work appropriately.
PIN: Personal Identification Number; normally, a 4 to 8 digits password that protects the SIM. The user of a GSM telephone is requested to enter the PIN after power-on. If the PIN is not entered correctly, service is denied.
ME: Mobile Equipment; the mobile telephone without the SIM card.
GPRS: General Packet Radio Service; packet mode data transmission service, overlaid to the GSM network infrastructure
SM: Short Message
CLI: Calling Line Identity
GPS: Global Positioning System; global positioning system operated by the Department of Defence of the United States of America

### State of the art

The invention is related to mobile telephone systems and more particularly to mobile telephones and the way emergency calls can be placed. Most mobile telephone systems (such as GSM) define a subscriber identity module (SIM) card to be used in conjunction with the mobile equipment (ME) itself.

A typical example is that of a regular mobile telephone. Regular mobile telephones can be used, of course, to place calls to emergency services (such as to an assistance centre of a security or health-care company, hereinafter often referred to as an emergency centre). Nation-wide public emergency services usually have a single access number, like 112 in Continental Europe, 999 in the United Kingdom or 911 in the United States. These services can usually be accessed from mobile telephones involving SIM cards (for example, from GSM mobile telephones), even in the absence of the SIM card. That is, without the SIM card, the mobile telephone cannot be used for "normal" telephone calls but it can still be used for placing calls to certain emergency numbers.

Even in the case that the home mobile network (HPLMN, that is, the network with which the user holds his subscription) of the user is not present in the area where the user is located, emergency calls to these nation-wide public emergency services can still be placed, as long as coverage by another operator exists.

Common mobile telephones currently available in the market have not been designed for simple and reliable access to emergency services in case of a real emergency situation. First of all, before dialling the number of the emergency service, the telephones need to be powered on (that is, put into their ON mode from their OFF mode) and, if the user wants a call to be placed to a different service than the public emergency service (for example, if the user wants to contact a private alarm or health-care company), the user's PIN must be entered manually. Although the PIN requesting function can be disabled in most mobile telephones, most users rely on the PIN for protection against unauthorised use of the telephone (for example, in the case of theft); thus, the PIN requesting function is usually enabled, that is, usually, it is necessary to enter the PIN prior to directing a telephone call to a number that is not one of the above-mentioned "nation-wide emergency numbers" (112, 999...).

Further, when using conventional mobile telephones, even in the case that the user wants to call to a public emergency service, still up to 4 keys need to be pressed, namely, the dial keys for "112" and the YES key (or equivalent) for proceeding with the call to the dialled number.

On the other hand, common mobile telephones are hard to use for many elderly and handicapped people, since their needs have not been taken into account when designing the telephones. Easy access to emergency services is a real demand from these user groups. However, currently, the trend is that mobile telephones are becoming more and more sophisticated, which may make them more difficult to use and less apt as devices for easily obtaining assistance in an emergency situation. It is considered that current mobile telephones are not fully adequate for use as "emergency devices", although it is possible to use them for calling certain emergency numbers.

Thus, there is a need for mobile telephones that are easy to use and that provide for an easy access to emergency services.

There are already some devices in the market that provide easy access to emergence services by means of a single button or key (a so-called "emergency key") which, when it is pressed, establishes a call to a private or public emergency centre. The known devices are specialised devices that mainly work in analogue cellular systems, where SIM cards are not used, whereby it is always possible to establish the call without entering PIN. The known devices can provide access to a single number or two and that is all. They do not combine the mobile telephone functionality with that of a personal emergency device. That is, the known devices are only used as emergency devices, and do not allow a mixed usage of the device, that is, so as to serve both as a mobile telephone and as an emergency device. If the device is intended to work in a GSM system, then PIN must be entered before dialling the number of, for example, a private emergency centre, or the PIN must be disabled by the user, thus making it possible for a non-authorised user (for example, in the case of theft) to freely use the mobile telephone.

Moreover, the traffic generated from a prior art device like the one previously described is low, since only emergency calls can be placed. However, a mobile telephony subscription must be made, in order that the device be useable for calling an emergency service (such as an assistance centre). Mobile operators would not put too much effort in subsidising a device like this, since the expected income is low, as the device will be used only for emergency calls.

Thus, an objective of the invention is to provide for a mobile telephone that can be used as a "normal" mobile telephone for telephone conversations, Short Message Service, etc., but that in addition is provided with features making it suitable for use as an emergency device for easily connecting a user with an emergency centre (such as a private security company, a health-care service centre, etc.) through a mobile telecommunications network; the device should preferably be suitable for elderly people.

### Description of the invention

A first aspect of the invention relates to a mobile telephone, comprising:
a mobile equipment part provided with dialling means (such as dial keys or buttons, or voice activated dialling means) for dialling telephone numbers;
means for setting up telephone calls to destinations corresponding to telephone numbers dialled using said dialling means, through a mobile telephony network, said means for setting up telephone calls including an antenna and electronic circuitry associated with the mobile equipment part and arranged to co-operate with a subscriber identity card to be placed in the mobile equipment part, said card having stored therein subscriber-related data including at least one personal identification number of the subscriber (currently, all GMS and UMTS telephones includes such means for setting up telephone calls);
a power-on means (such as a power-on key) arranged for selectively setting the telephone into an OFF state, in which telephone calls cannot be set up using said dialling means, and an ON state, in which telephone calls can be set up using said dialling means, the telephone being arranged so that after being set into the ON state and before allowing telephone calls to be set up using said dialling means, a user must enter an identification number (this feature is present in practically all GMS telephones; the user can usually disable this function so that the telephone can be used after being put into the ON state without any need for entering the PIN, but this makes easier for a third party to use the telephone fraudulently, for example, in the case of theft), the telephone comprising means for comparing an entered identification number with the, at least one, personal identification number stored in the card, whereby the telephone is arranged so that telephone calls can be set up only if said entered identification number is equal to a personal identification number stored in the card (applicable as long as the function requiring entry of the PIN has not been disabled by the user);
an emergency key arranged so that actuation of said emergency key triggers the mobile telephone to direct a telephone call to, at least, one pre-established emergency telephone number (stored in the telephone).

According to the invention, the mobile telephone is arranged so that upon actuation of said emergency key (for example, by pressing said key for a period of time longer than a predetermined period of time, for example, 2 seconds), and if the telephone is in the OFF state,
the telephone is automatically set into the ON state (basically, the telephone includes means, for example, a module, such as a program, associated with the emergency key, arranged to detect when the emergency key is actuated and then to override the conventional power-on means so as to set the telephone into the ON state when the emergency key is actuated), and
an identification number pre-stored in a memory in the mobile equipment part is retrieved (for example, by the same module/program mentioned above) and processed by the means for comparing an entered identification number with the, at least one, personal identification number stored in the card, so that, if said identification number is identical to a personal identification number stored in the card, the telephone call can be directed to said, at least one, pre-established emergency telephone number, over a mobile telephony network. Basically, the module/program associated with the emergency key can retrieve the corresponding emergency telephone number from the memory space where it is stored, and forward it to the means for setting up telephone calls, in a manner similar to the manner in which, in a conventional mobile telephone, a telephone number stored in the telephone can be retrieved -for example, by entering the name of the corresponding subscriber using menu functions- and automatically processed so as to set up a call to said subscriber. This kind of programming can easily be performed by the skilled person and does not require any further explanation.

Now, in this way, by the means outlined above, a telephone having the features of a normal mobile telephone (such as a GSM telephone) can be used for setting up an emergency call, even if the telephone is in its "OFF" state (that is, switched off), just by means of pressing an emergency key, without having to manipulate the power-on means, and without having to enter the PIN of the subscriber (and without any need for previously disabling the function requiring entry of the PIN prior to establishing "normal" telephone calls using the dialling means). By pressing the emergency key, the telephone is automatically switched on, an "automatic" entry of the PIN takes place, and the telephone can lock onto a cellular network and place a call to a predetermined emergency centre or other emergency service number.

The mobile telephone can be arranged so that, when a telephone call has been set up using the emergency key, and (at least) if the telephone was in the OFF state when the emergency key was actuated, the mobile telephone is returned to said OFF state after expiration of a pre-established period of time after termination of said telephone call. This can be achieved by a timer, for example, by a soft-ware implemented timer arranged so that upon actuation of the emergency key when the telephone is in its OFF state, the timer starts to run and, after expiration of a pre-determined period, it triggers an action so as to bring the telephone back into its OFF state.

The mobile telephone can be arranged so that, when a telephone call has been set up using the emergency key, and (at least) if the mobile telephone was in the OFF state when the emergency key was actuated, the mobile telephone can only be used for incoming calls and/or for setting up calls to telephone numbers included in a specific list of emergency telephone numbers. This can be implemented by means of suitable software "blocking" establishment of out-going telephone calls except for out-going calls to telephone numbers included in said list. Thereby, the risk for fraudulent use of, for example, a stolen telephone, is reduced, as use of the emergency key will not make it possible to set up "normal" telephone calls without entering the PIN; only incoming calls and/or calls to pre-specified emergency numbers can be attended using the emergency key to obviate the need for entering the PIN. For rendering a stolen telephone even more useless, the allowed incoming calls can be restricted to incoming calls from calling numbers specified on a list of allowed calling numbers (that is, corresponding to subscribers from which incoming calls can be accepted during the described conditions); said list can be stored in a memory of the telephone.

Alternatively, the telephone can be arranged so that, when a telephone call has been set up using the emergency key, and (at least) if the telephone was in the OFF state when the emergency key was actuated, the telephone is returned to said OFF state directly upon termination of said telephone call (also this can be easily implemented by means of suitable software in the telephone).

The telephone can comprise memory means for storing a plurality of pre-established emergency telephone numbers, whereby the telephone can be arranged so that actuation of the emergency key triggers the mobile telephone to sequentially direct a telephone call to said pre-established emergency telephone numbers, until it achieves setting up a telephone communication with one of said pre-established telephone numbers. That is, if the telephone fails in its intent to successfully establish connection (a call) with the first number on the list, the telephone tries to establish connection with the second number, and so on. This increases the chances of succeeding in contacting at least one emergency centre or similar when pressing the emergency key in an emergency situation. Of course, as an alternative or as a complement, the telephone can also be arranged to repeat its intent to reach a specific emergency number, for example, before or after trying to reach other numbers. The telephone can be arranged (programmed) to give up after a certain number of intents.

The mobile telephone can further be provided with a plurality additional dialling keys, the telephone being arranged so that actuation of one of said additional dialling keys triggers the telephone to direct a telephone call to a pre-established telephone number stored in the telephone and associated with said additional dialling key.

In order to make the telephone easier to use for persons not used to mobile telephones (for example, elderly persons who have not been using mobile telephones before but who now consider that they could need a telephone with the emergency functions disclosed herein), the telephone can be provided with a dial tone generating key, the telephone being arranged so that when said dial tone generating key is pressed, the telephone generates a dial tone. This key can correspond to the YES key of a "standard" mobile telephone. Thus, the behaviour of the mobile telephone towards the user will be very similar to the behaviour of a regular, land-line telephone, thus making the telephone easier to use for, for example, elderly people. This can be easily implemented by means of a suitable software that, upon actuation of the YES key, produces a "dial tone" with a frequency and sound similar to the frequency and sound of the dial tone heard when calling from a non-mobile (land-line) telephone. Entered digits are accepted afterwards and the dial tone stopped. The call is sent once a pre-determined time has elapsed since the last digit was entered.

For increased security (that is, to even further reduce the risk that an emergency call may be left unattended), the telephone can be arranged to send a short message and/or a data packet having a pre-determined content, to a pre-established destination, upon actuation on the emergency key. This can be achieved with suitable software triggered by the actuation of the emergency key and comprising "macro" instructions so as to compose -using a text string pre-stored in a memory of the mobile terminal (mobile equipment) or in the card- the short message (SM) or the data packet and send said short message or packet, in a conventional way (in accordance with

### prior art).

Another aspect of the invention relates to a mobile telephone comprising:
a mobile equipment part provided with dialling means (such as dial keys or voice activated dialling means) for dialling telephone numbers;
means for setting up telephone calls to destinations corresponding to telephone numbers dialled using said dialling means, through a mobile telephony network, said means for setting up telephone calls including an antenna and electronic circuitry associated with the mobile equipment part (that can be arranged to co-operate with a subscriber identity card to be placed in the mobile equipment part, said card having stored therein subscriber-related data);
means for receiving incoming calls from a calling party and means for extracting a calling line identity corresponding to the telephone number of the calling party;
means for selectively setting the mobile telephone into a handset mode (in which, basically, a loudspeaker of the telephone is arranged so that the output from the loudspeaker is only to be heard by someone holding the telephone close to his or her ear, and in which a microphone of the telephone is arranged so as to take up -for transmission- what is spoken by a mouth close to the microphone) and an hands-free mode (in which a loudspeaker of the telephone is preferably arranged to provide an output loud enough to be heard at a distance from the telephone, that is, without the user having to hold the telephone against his or her ear, and where a microphone is arranged so as to take up -for transmission- what is said at a larger distance from the telephone) (the microphone and loudspeaker in use in the handset mode and in the hands-free mode can be the same, although working in different modes with different gains; however, it is also possible to use a terminal or mobile equipment having two sets of microphones and/or loudspeakers, one for the handset and one for the hands-free mode).

In accordance with this aspect of the invention, the mobile telephone further comprises
memory means for storing at least one predetermined telephone number;
means for obtaining, as a response to an incoming call from a calling party, the calling line identity of said calling party from said means for extracting a calling line identity;
means for comparing said calling line identity with said, at least one, predetermined telephone number stored in said memory means so as to determine whether said calling line identity is identical with one of said predetermined telephone numbers stored in said memory means;
whereby the mobile telephone is arranged so that if said calling line identity is found to be identical with one of said predetermined telephone numbers, and when the incoming call is not answered within a predetermined period of time, an automatic answer function is triggered, the automatic answer function being arranged to answer the call and to set the telephone into the hands-free mode.

In this way, it is possible to call the user from one or several predetermined telephone numbers (for example, corresponding to emergency centres, or to friends or relatives of the user) and, should the user not be able to answer, the telephone will, after a certain period of time has lapsed, enter the hands-free mode, whereby communication with the user will be possible even in the case that the user should be unable to manipulate the telephone manually (for example, due to a broken leg, paralysis, etc.). That is, this automatic answer function makes it possible to get in contact with a user by calling his mobile telephone number, even if the user is unable to manually attend the call.

Of course, both aspects of the invention can be incorporated in one single mobile telephone.

The handling of the telephone calls at the emergency centre can be performed in the following manner:

In order to ensure assistance to the highest extent, phone calls that are received at the emergency centre arrive with their respective CLI (Calling Line Identity, normally, the telephone number of the calling party). The emergency centre can be provided with the so-called "Call Waiting" feature, so that it can display the number that is calling. For instance, if the incoming line is a GSM or an ISDN line, the CLI is displayed, even if the line is engaged in a conversation. When the CLI has been detected by the emergency centre, it is analysed against a database of subscribers. If the CLI matches one of the subscribers registered in said database, an operator at the emergency centre may choose between 2 options:
i) Waiting for a line to be free and then initiate a call to the subscriber (if the mobile telephone is provided with the automatic answering function described above, and if the CLI of the call from the centre to the mobile telephone matches one of the predetermined telephone numbers stored in the memory means of said mobile telephone, the telephone automatically answers the call, thus providing immediate assistance, also in case the user should be unable to handle the telephone manually).
ii) Put on hold one of the currently active conversations and answer the call. In this way the user will receive the lowest possible response time and a larger number of users than telephone lines can be attended simultaneously.

An alternative or complement to what has been explained above is to send a Short Message (SM) or a packet of data simultaneously with the call set-up. In this way, via a data transmission means, the emergency centre is warned about an emergency call that cannot be attended immediately (for lack of telephone lines and/or for lack of operators attending the incoming calls) and react according to a predetermined action protocol (for instance, by freeing one telephone line and calling immediately to this subscriber).

The telephone can be arranged (programmed) so that if it does not manage to reach (one of) the predetermined emergency centre(s) with the above described means within a pre-determined time period (for example, 1 minute), it will automatically direct a call to a public emergency number (for example, 112 or 911, depending on the country). If by any reason the call is not answered, the process outlined above can be repeated over and over again, until attention is obtained from an emergency centre.

Also, the telephone can be arranged (programmed) to direct a call to a public emergency number (such as 112 or 911) if the telephone does not manage to lock onto its HPLMN, there being another network present, providing coverage in the area. For example, if the user is in his home country and has his subscription with company A, and is located in an area in which company A does not provide coverage, while coverage is provided by company B, the user will not be able to place mobile telephone calls to the "private" emergency numbers associated with the emergency key; however, the user will be able to obtain assistance by placing a call to the public emergency number 112, ...), through the network operated by company B.

Preferably, the mobile telephone is arranged to emit a warning signal (for example, a light and/or acoustic signal) when the emergency key is pressed, in order to prevent the user from placing emergency calls by mistake; this warning signal is especially useful if the telephone is arranged to initiate the process for placing an emergency call only if the emergency key is pressed for a certain period of time (for example, 2 seconds).

Preferably, the telephone is provided with means, such as a display or synthesised speech, for informing the user about the number to which a call is being directed. This means that the user will know that the phone call is being placed to, for example, the public emergency number (112,...) instead of to the users own (private) emergency centre.

The mobile telephone can be equipped with means for providing its geographical location, such as a GPS receiver, and with means for sending location information (via SMS, GPRS, WAP or any other data transmission means), simultaneously with the establishment of the emergency call.

The procedures described above may also be fully applicable for an emergency call by pressing the EMERGENCY key in case the phone is already powered on.

Thus, the present apparatus and associated method provides a very reliable way of providing emergency assistance. It also allows the battery to last very long, as the telephone does not need to be powered on all the time. It is well known that elderly people may suffer from memory faults and may forget to power on a regular mobile phone. Thus, the mobile telephone of the invention is especially useful for elderly and/or disabled people, who with this apparatus may increase their peace of mind and security.

A further aspect of the invention relates to a method of operating a mobile telephone comprising a mobile equipment part provided with dialling means for dialling telephone numbers and a subscriber identity card to be placed in the mobile equipment part, said card having stored therein subscriber-related data including at least one personal identification number of the subscriber, the mobile equipment part comprising power-on means (such as a power-on key) arranged for selectively setting the telephone into an OFF state, in which telephone calls cannot be set up using said dialling means, and an ON state, in which telephone calls can be set up using said dialling means, the telephone being arranged so that after being set into the ON state and prior to allowing telephone calls to be set up using said dialling means, a user must enter an identification number, the subscriber equipment further comprising an emergency key arranged so that actuation of said emergency key triggers the mobile telephone to direct a telephone call to, at least, one pre-established emergency telephone number.

The method comprises the steps of, upon actuation of said emergency key, and if the telephone is in the OFF state:
- automatically setting the telephone into the ON state;
- retrieving an identification number pre-stored in a memory in the mobile equipment part;
- comparing said identification number with the, at least one, personal identification number stored in the card;
- if said identification number is identical to a personal identification number stored in the card, directing a telephone call to said, at least one, pre-established emergency telephone number, over a mobile telephony network.

If a plurality of pre-established emergency telephone numbers are stored in the telephone, upon actuation of the emergency key the mobile telephone can be triggered to sequentially direct a telephone call to said pre-established emergency telephone numbers, until it achieves setting up a telephone communication with one of said pre-established telephone numbers.

The method can comprise the further step of sending a short message and/or a data packet having a pre-determined content, to a pre-established destination, upon actuation on the emergency key.

A further aspect of the invention relates to a method of operating a mobile telephone comprising a mobile equipment part provided with dialling means for dialling telephone numbers, means for setting up telephone calls to destinations corresponding to telephone numbers dialled using said dialling means, through a mobile telephony network, means for receiving incoming calls from a calling party and means for extracting a calling line identity corresponding to the telephone number of the calling party, means for selectively setting the mobile telephone into a handset mode and an hands-free mode, and memory means for storing at least one predetermined telephone number.

The method comprises the steps of, as a response to an incoming call from a calling party,
- obtaining the calling line identity of said calling party from said means for extracting a calling line identity;
- comparing said calling line identity with said, at least one, predetermined telephone number stored in said memory means and determining whether said calling line identity is identical with one of said predetermined telephone numbers stored in said memory means;
- if said calling line identity is found to be identical with one of said predetermined telephone numbers, and when the incoming call is not answered within a predetermined period of time, triggering an automatic answer function, whereby said automatic answer function answers the call and sets the telephone into the hands-free mode.

### Brief description of the drawings

Figure 1 illustrates the casing of a mobile equipment or terminal according to a preferred embodiment of the invention.

Figure 2 schematically illustrates relevant modules of the mobile telephone in accordance with a preferred embodiment of the invention.

Figure 3 is a block diagram showing some features of a preferred embodiment of the invention.

Figure 4 schematically illustrates another preferred embodiment of the invention.

### Description of preferred embodiments of the invention

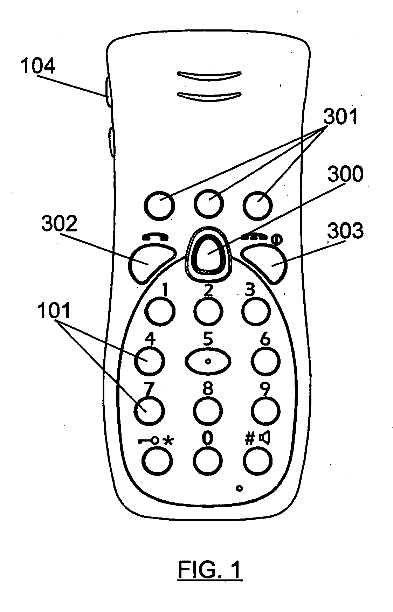

Figure 1 illustrates the casing of the mobile telephone in accordance with a preferred embodiment of the invention; it includes dialling means 101 in the form of dial keys for dialling telephone numbers, a power-on key 104 that can be multiplexed with the NO 303 key, an emergency key 300, a plurality additional dial keys 301 for dialling pre-established telephone numbers stored in the telephone (this is easily implemented with software routines arranged to be triggered by said additional dial keys) and associated with said additional dial keys, and the conventional YES 302 and NO 303 keys.

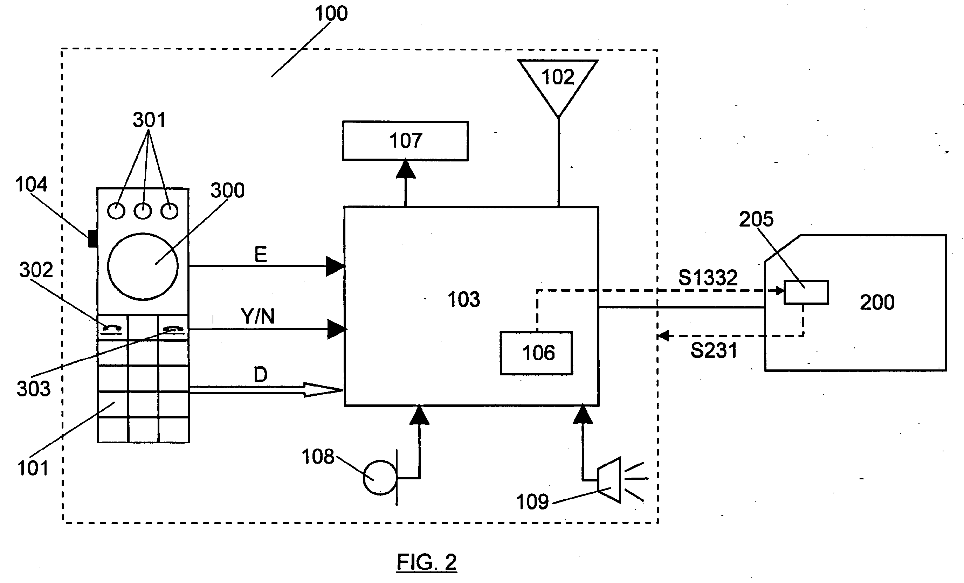

**Figure 2** schematically illustrates the functional structure of the telephone. The mobile equipment part 100 is provided with the dial keys 101 for dialling telephone numbers, a display 107, a microphone 108 and a loudspeaker 109. The mobile equipment part further comprises means for setting up telephone calls to destinations corresponding to telephone numbers dialled using said dialling means, through a mobile telephony network, said means for setting up telephone calls including an antenna 102 and electronic circuitry 103 associated with the mobile equipment part and arranged to co-operate with a subscriber identity card 200 or module to be placed in the mobile equipment part, said card having stored therein subscriber-related data including at least one personal identification number of the subscriber.

The mobile equipment part further comprises a power-on key 104 arranged for selectively setting the telephone into an OFF state, in which telephone calls cannot be set up using said dialling means, and an ON state, in which telephone calls can be set up using said dialling means 101. The telephone is arranged so that after being set into the ON state and before allowing telephone calls to be set up using said dialling means, the user must enter an identification number. The telephone further comprises means 205 for comparing an entered identification number with the, at least one, personal identification number stored in the card; the telephone is arranged so that telephone calls can be set up only if said entered identification number is equal to a personal identification number stored in the card (this is applicable as long as the function requiring entry of the PIN has not been disabled by the user). In this preferred embodiment, the means 205 for comparing an entered identification number with the, at least one, personal identification number stored in the card, are implemented in the card, by software triggered by an instruction and arranged to receive an entered identification number from the mobile equipment part, to compare it with the personal identification number stored in the card, and to send a reply indicating acceptance or non-acceptance of the entered identification number, depending on whether it was identical or not with (one of) the stored personal identification number(s).

The electronic circuitry is arranged to receive and to operate following instructions received by actuation of the different keys, for example, dialled telephone numbers D and the conventional YES/NO commands (Y/N) entered by means of the YES/NO keys.

The casing further comprises an emergency key 300 arranged so that actuation of said emergency key triggers (E) the mobile telephone to direct a telephone call to, at least, one pre-established emergency telephone number (stored in the telephone).

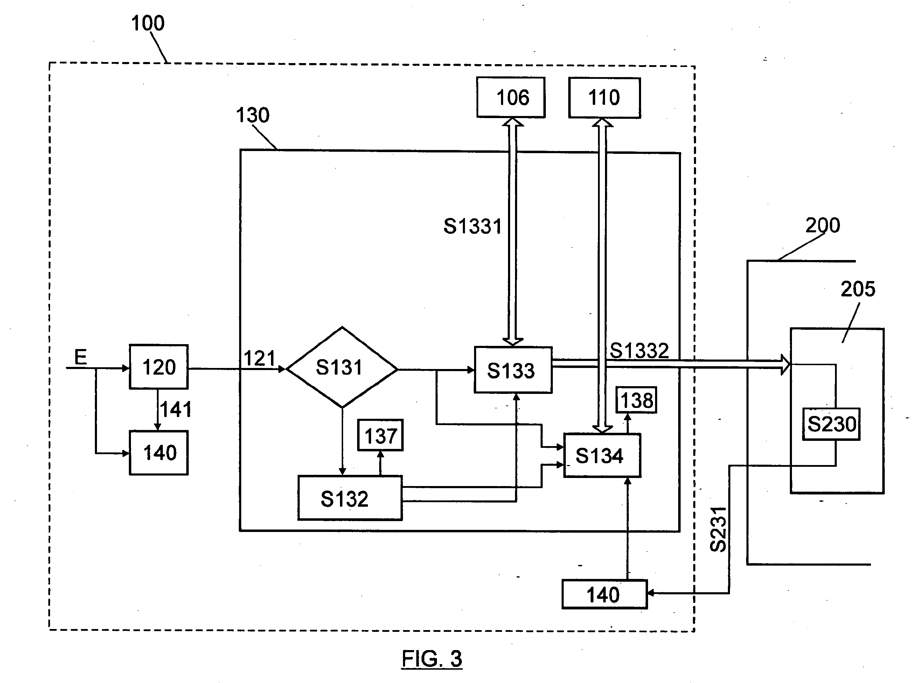

According to the invention, the mobile telephone is arranged so that upon actuation of said emergency key (for example, by pressing said key for a period of time longer than a predetermined period of time, for example, 2 seconds):
1) if the telephone is in the OFF state, it is automatically set into the ON state. This is achieved by a software and/or hardware module which is triggered by a timer 120 which in turn is triggered E by the emergency key, as schematically illustrated in **figure 3:** the timer 120 starts to run when the emergency key is actuated upon (pressed) producing a trigger signal "E" and if the trigger signal E remains on during a time longer than a pre-determined period of time, the timer produces an output signal 121 that triggers a software module 130 which checks (step S131) if the telephone is in the ON or in the OFF state; if it is in the OFF state, it then turns the telephone into its ON state (step S132), basically, overriding the ON/OFF switch 104.
2) Next, in step S133, an identification number pre-stored in a memory 106 in the mobile equipment part 100 is retrieved (step S1331) and sent (step S1332) to the subscriber identity card 200, for processing (step S230) by the means 205 for comparing an entered identification number with the, at least one, personal identification number stored in the card (these means 205 can consist of any conventional software used for this purpose in commercially available subscriber identity cards, such as SIM/USIM cards, etc.).
   If the identification number is identical to a personal identification number stored in the card 200, the means 205 provides an output S231 which triggers a second software module 140 which enables the mobile telephone for outgoing telephone calls, in a conventional manner.
3) In parallel with step S133, a step S134 is performed which, basically, waits for a confirmation of enabling of the mobile telephone for outgoing calls and once it detects that the second software module has provided for such enabling, it initiates a telephone call to a pre-established emergency telephone number, over a mobile telephony network (by retrieving the corresponding emergency telephone number from the memory space 110 where it is stored, and forwarding it to the means for setting up telephone calls, in a manner similar to the manner in which, in a conventional mobile telephone, a telephone number stored in the telephone can be retrieved -for example, by entering the name of the corresponding subscriber using menu functions- and automatically processed so as to set up a call to said subscriber).

That is, by pressing the emergency key, the telephone is automatically switched on (step S132), an "automatic" entry of the PIN takes place (step S133), and the telephone can lock onto a cellular network and place a call to a predetermined emergency centre or other emergency service number.

The mobile telephone can be arranged so that, when a telephone call has been set up using the emergency key, and at least if the telephone was in the OFF state when the emergency key was actuated, the mobile telephone is returned to said OFF state after expiration of a pre-established period of time after termination of said telephone call. This can be achieved by a soft-ware implemented timer arranged so that upon actuation of the emergency key when the telephone is in its OFF state, the timer is activated so that it starts to run after termination of the telephone call and, after expiration of a pre-determined period, it triggers an action so as to bring the telephone back into its OFF state. The timer can, for example, be activated by step S132 above and later triggered by termination of the telephone call that eventually is set up.

The mobile telephone can be arranged so that, when a telephone call has been set up using the emergency key, and at least if the mobile telephone was in the OFF state when the emergency key was actuated, the mobile telephone can only be used for incoming calls and/or for setting up calls to telephone numbers included in a specific list of emergency telephone numbers. This can be implemented by means of suitable software 137 -that can be triggered by step S132- "blocking" establishment of out-going telephone calls except for out-going calls to telephone numbers included in said list. Thereby, the risk for fraudulent use of, for example, as stolen telephone, is reduced, as use of the emergency key will not make it possible to set up "normal" telephone calls without entering the PIN; only incoming calls and/or calls to pre-specified emergency numbers can then be attended using the emergency key to obviate the need for entering the PIN. For rendering a stolen telephone even more useless, the allowed incoming calls can be restricted to incoming calls from calling numbers specified on a list of allowed calling numbers (that is, corresponding to subscribers from which incoming calls can be accepted during the described conditions); said list can be stored in a memory of the telephone.

Alternatively, the telephone can be arranged so that, when a telephone call has been set up using the emergency key, and at least if the telephone was in the OFF state when the emergency key was actuated, the telephone is returned to said OFF state immediately upon termination of said telephone call (also this can be easily implemented by means of suitable software in the telephone; instead of the timer mentioned above, this embodiment could comply a routine for watching the emergency telephone call so as to provoke a return to the OFF state of the telephone upon termination of the telephone call).

The memory means 110 can store a plurality of pre-established emergency telephone numbers, whereby, in step S134, the telephone can sequentially retrieve said telephone numbers and direct a telephone call to said telephone numbers, until it achieves setting up a telephone communication with one of said telephone numbers. The telephone can also be arranged to repeat its intent to reach a specific emergency number, for example, before or after trying to reach other numbers. The telephone can be arranged (programmed) to give up after a certain number of intents.

The YES key 302 can be arranged so that when it is pressed, it triggers a software module generating a dial tone, in order that the behaviour of the mobile telephone towards the user will be very similar to the behaviour of a regular, land-line telephone, thus making the telephone easier to use for, for example, elderly people. This can be easily implemented by means of a suitable software that, upon actuation of the YES key, produces a "dial tone" with a frequency and sound similar to the frequency and sound of the dial tone heard when calling from a non-mobile (land-line) telephone. Entered digits are accepted afterwards and the dial tone stopped. The call is sent once a pre-determined time has elapsed since the last digit was entered.

For increased security (that is, to even further reduce the risk that an emergency call may be left unattended), the telephone can arranged to send a short message and/or a data packet having a pre-determined content, to a pre-established destination, upon actuation on the emergency key. This can be achieved with suitable software 138 triggered by the actuation of the emergency key and comprising "macro" instructions so as to compose -using a text string pre-stored in a memory of the mobile terminal (mobile equipment) or in the card-; for example, this soft-ware 138 can be "triggered" by step S134 described above (as schematically illustrated in figure 3).

The mobile telephone can comprise means 140 arranged in parallel with the timer 120 and producing a warning signal (for example, a light and/or acoustic signal) when the emergency key is pressed, in order to prevent the user from placing emergency calls by mistake; the timer 120 can provide an output signal 141 arranged to stop (or to change, for example, the frequency) said warning signal at the same time as the signal 121 triggers the software module.

The mobile telephone can be arranged so that the display 107 informs the user about the number to which a call is being directed.

The mobile telephone can be arranged (programmed) so that if it does not manage to reach (one of) the predetermined emergency centre(s) with the above described means within a pre-determined time period (for example, 1 minute), it will automatically direct a call to a public emergency number (for example, 112 or 911, depending on the country). If by any reason the call is not answered, the process outlined above can be repeated over and over again, until attention is obtained from an emergency centre.

Also, the telephone can be arranged (programmed) to direct a call to a public emergency number (such as 112 or 911) if the telephone does not manage to lock onto its HPLMN, there being another network present, providing coverage in the area.

The procedures described above may also be fully applicable for an emergency call by pressing the EMERGENCY key in case the phone is already powered on.

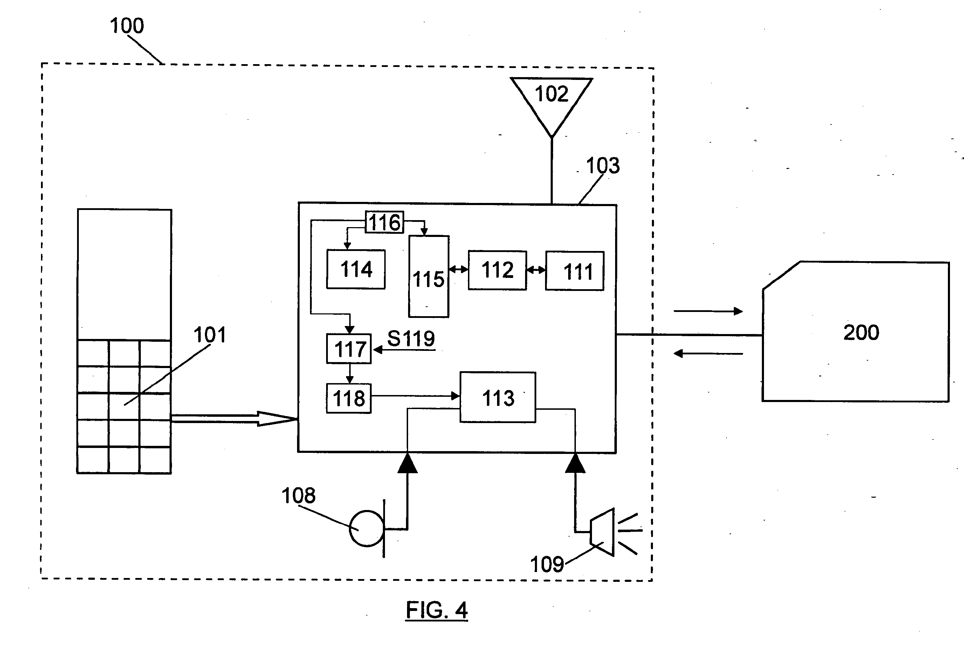

According to another embodiment of the invention, schematically illustrated in **figure 4** (and which can be implemented in the same telephone as, and operate in a complementary manner with, the embodiment described above), the mobile telephone comprises:
a mobile equipment part provided with dialling means 101 (such as dial keys or voice activated dialling means) for dialling telephone numbers;
means for setting up telephone calls to destinations corresponding to telephone numbers dialled using said dialling means, through a mobile telephony network, said means for setting up telephone calls including an antenna 102 and electronic circuitry 103 associated with the mobile equipment part and arranged to co-operate with a subscriber identity card 200 to be placed in the mobile equipment part, said card having stored therein subscriber-related data;
means 111 for receiving incoming calls from a calling party and means 112 for extracting a calling line identity corresponding to the telephone number of the calling party;
means 113 for selectively setting the mobile telephone into a handset mode (in which, basically, a loudspeaker 109 of the telephone are arranged so that the output from the loudspeaker is only to be heard by someone holding the telephone close to his or her ear, and in which a microphone 108 of the telephone is arranged so as to take up -for transmission- what is spoken by a mouth close to the microphone) and an hands-free mode (in which a loudspeaker 109 of the telephone is preferably arranged to provide an output loud enough to be heard at a distance from the telephone, that is, without the user having the hold the telephone against his or her ear, and in which a microphone 108 is arranged so as to take up -for transmission- what is said at a larger distance from the telephone).

In accordance with this embodiment of the invention, the mobile telephone further comprises
memory means 114 for storing at least one predetermined telephone number;
means 115 for obtaining, as a response to an incoming call from a calling party, the calling line identity of said calling party from said means for extracting a calling line identity;
means 116 for comparing said calling line identity with said, at least one, predetermined telephone number stored in said memory means 114 so as to determine whether said calling line identity is identical with one of said predetermined telephone numbers stored in said memory means.

The mobile telephone is arranged so that if said calling line identity is found to be identical with one of said predetermined telephone numbers, the means 116 for comparing said calling line identity with said, at least one, predetermined telephone number, trigger a timer 117 (implemented by a software module) which counts a predetermined period of time and is arranged to be interrupted if the incoming call is answered (S119) during said period. If it is not answered, the timer triggers an automatic answer function 118 arranged to answer the call and to set the telephone into the hands-free mode.

In this way, as outlined above, it is possible to call the user from one or several predetermined telephone numbers (for example, corresponding to emergency centres, or to friends or relatives of the user) and, should the user not be able to answer, the telephone will, after a certain period of time has lapsed, enter the hands-free mode, whereby communication with the user will be possible even in the case that the user should be unable to manipulate the telephone manually (for example, due to a broken leg, paralysis, etc.).

Of course, both aspects of the invention can be incorporated in one single mobile telephone.

The mobile telephone can be equipped with means for providing its geographical location, such as a GPS receiver, and with means for sending location information (via SMS, GPRS, WAP or any other data transmission means), simultaneously with the establishment of the emergency call.

Throughout the description and claims of the specification, the word "comprise" and variations of the word, such as "comprising", is not intended to exclude other additives, components, integers or steps.

## Claims

1. A mobile telephone, comprising:
a mobile equipment part (100) provided with dialling means (101) for dialling telephone numbers;
means for setting up telephone calls to destinations corresponding to telephone numbers dialled using said dialling means (101), through a mobile telephony network, said means for setting up telephone calls including an antenna (102) and electronic circuitry (103) associated with the mobile equipment part (100) and arranged to co-operate with a subscriber identity card (200) to be placed in the mobile equipment part, said card having stored therein subscriber-related data including at least one personal identification number of the card;
a power-on means (104) arranged for selectively setting the telephone into an OFF state, in which telephone calls cannot be set up using said dialling means, and an ON state, in which telephone calls can be set up using said dialling means, the telephone being arranged so that after being set into the ON state and before allowing telephone calls to be set up using said dialling means, a user must enter an identification number,
the card comprising means (205) for comparing an entered identification number with the, at least one, personal identification number stored in the card (200), whereby the telephone is arranged so that telephone calls can be set up only if said entered identification number is equal to a personal identification number stored in the card;
an emergency key (300) arranged so that actuation of said emergency key triggers the mobile telephone to direct a telephone call to, at least, one pre-established emergency telephone number;
**characterised in that**
the mobile telephone is arranged so that upon actuation of said emergency key, and if the telephone is in the OFF state,
the telephone is automatically set into the ON state, and
an identification number pre-stored in a memory (106) in the mobile equipment part is retrieved (S1331) and processed (S230) by the means (205) for comparing an entered identification number with the, at least one, personal identification number stored in the card (200), so that, if said identification number is identical to a personal identification number stored in the card (200), a telephone call can be directed to said, at least one, pre-established emergency telephone number, over a mobile telephony network.

2. A mobile telephone according to claim 1, wherein the mobile telephone is arranged so that, when a telephone call has been set up using the emergency key, and if the telephone was in the OFF state when the emergency key was actuated, the mobile telephone is returned to said OFF state after expiration of a pre-established period of time after termination of said telephone call.

3. A mobile telephone according to claim 1 or 2, wherein the mobile telephone is arranged so that, when a telephone call has been set up using the emergency key, and if the mobile telephone was in the OFF state when the emergency key was actuated, the mobile telephone can only be used for incoming calls and/or for setting up calls to telephone numbers included in a list of emergency telephone numbers.

4. A mobile telephone according to claim 3, wherein said incoming calls are restricted to incoming calls from calling numbers specified on a list of allowed calling numbers.

5. A mobile telephone, according to claim 1, wherein the telephone is arranged so that, when a telephone call has been set up using the emergency key, and if the telephone was in the OFF state when the emergency key was actuated, the telephone is returned to said OFF state upon termination of said telephone call.

6. A mobile telephone according to any of the preceding claims, wherein a plurality of pre-established emergency telephone numbers are stored in the telephone, the telephone being arranged so that actuation of the emergency key triggers the mobile telephone to sequentially direct a telephone call to said pre-established emergency telephone numbers, until it achieves setting up a telephone communication with one of said pre-established telephone numbers.

7. A mobile telephone according to any of the preceding claims, further having a plurality additional dialling keys (301), the telephone being arranged so that actuation of one of said additional dialling keys triggers the telephone to direct a telephone call to a pre-established telephone number stored in the telephone and associated with said additional dialling key.

8. A mobile telephone according to any of the preceding claims, further including a dial tone generating key (302), the telephone being arranged so that when said dial tone generating key is pressed, the telephone generates a dial tone.

9. A mobile telephone according to any of the preceding claims, wherein said telephone is arranged to send a short message and/or a data packet having a pre-determined content, to a pre-established destination, upon actuation on the emergency key.

10. A mobile telephone comprising:
a mobile equipment part (100) provided with dialling means (101) for dialling telephone numbers;
means for setting up telephone calls to destinations corresponding to telephone numbers dialled using said dialling means (101), through a mobile telephony network, said means for setting up telephone calls including an antenna (102) and electronic circuitry (103) associated with the mobile equipment part (100);
means for receiving incoming calls from a calling party and means for extracting a calling line identity corresponding to the telephone number of the calling party;
means for selectively setting the mobile telephone into a handset mode and an hands-free mode;
**characterised in that** the mobile telephone further comprises
memory means (114) for storing at least one predetermined telephone number;
means (115) for obtaining, as a response to an incoming call from a calling party, the calling line identity of said calling party from said means for extracting a calling line identity;
means (116) for comparing said calling line identity with said, at least one, predetermined telephone number stored in said memory means so as to determine whether said calling line identity is identical with one of said predetermined telephone numbers stored in said memory means;
whereby the mobile telephone is arranged so that if said calling line identity is found to be identical with one of said predetermined telephone numbers, and when the incoming call is not answered within a predetermined period of time, an automatic answer function (118) is triggered, the automatic answer function being arranged to answer the call and to set the telephone into the hands-free mode.

11. The mobile telephone as per claim 10, said telephone being a mobile telephone as per any of claims 1-9.

12. A method of operating a mobile telephone comprising a mobile equipment part (100) provided with dialling means (101) for dialling telephone numbers and a subscriber identity card (200) to be placed in the mobile equipment part, said card having stored therein subscriber-related data including at least one personal identification number of the subscriber, the mobile equipment part comprising power-on means (104) arranged for selectively setting the telephone into an OFF state, in which telephone calls cannot be set up using said dialling means, and an ON state, in which telephone calls can be set up using said dialling means, the telephone being arranged so that after being set into the ON state and before allowing telephone calls to be set up using said dialling means, a user must enter an identification number, whereby the telephone is arranged so that telephone calls can be set up only if said entered identification number is equal to a personal identification number stored in the card, the subscriber equipment further comprising an emergency key (300) arranged so that actuation of said emergency key triggers the mobile telephone to direct a telephone call to, at least, one pre-established emergency telephone number;
**characterised in that** the method comprises the steps of, upon actuation of said emergency key, and if the telephone is in the OFF state:
- automatically setting the telephone into the ON state;
- retrieving an identification number pre-stored in a memory (106) in the mobile equipment part;
- comparing (S230) said identification number with the, at least one, personal identification number stored in the card (200);
- if said identification number is identical to a personal identification number stored in the card (200), directing a telephone call to said, at least one, pre-established emergency telephone number, over a mobile telephony network.

13. A method according to claim 12, wherein a plurality of pre-established emergency telephone numbers are stored in the telephone and, upon actuation of the emergency key, the mobile telephone is triggered to sequentially direct a telephone call to said pre-established emergency telephone numbers, until it achieves setting up a telephone communication with one of said pre-established telephone numbers.

14. A method of operating a mobile telephone comprising a mobile equipment part (100) provided with dialling means (101) for dialling telephone numbers, means for setting up telephone calls to destinations corresponding to telephone numbers dialled using said dialling means (101), through a mobile telephony network, said means for setting up telephone calls including an antenna (102) and electronic circuitry (103) associated with the mobile equipment part (100), means for receiving incoming calls from a calling party and means for extracting a calling line identity corresponding to the telephone number of the calling party, means for selectively setting the mobile telephone into a handset mode and an hands-free mode, and memory means for storing at least one predetermined telephone number;
**characterised in that** the method comprises the steps of, as a response to an incoming call from a calling party,
- obtaining the calling line identity of said calling party from said means for extracting a calling line identity;
- comparing said calling line identity with said, at least one, predetermined telephone number stored in said memory means and determining whether said calling line identity is identical with one of said predetermined telephone numbers stored in said memory means;
- if said calling line identity is found to be identical with one of said predetermined telephone numbers, and when the incoming call is not answered within a predetermined period of time, triggering an automatic answer function, whereby said automatic answer function answers the call and sets the telephone into the hands-free mode.
